# EUROPEAN PATENT APPLICATION

(11) **EP 2 123 954 A2**
(43) Date of publication of application: **25.11.2009**
(21) Application number: 09160598.0
(22) Date of filing: 19.05.2009
(51) Int. Cl.: F16K 11/20

(54) **Tap/mixer unit for water systems**

(30) Priority: 20.05.2008 IT TO20080376
(71) Applicant: Behr Thermot-tronik Italia S.P.A., 10123 Torino (IT); Equa S.r.l., 28883 Gravellona Toce (VB) (IT)
(72) Inventor: Triberti, Franco, 10098 Rivoli (TO) (IT); Ciana, Giulio, 28877 Ornavasso (VB) (IT)
(74) Representative: Buzzi, Franco

(57) **Abstract**

Tap/mixer unit for water systems comprising a single tubular body (2) provided with a first and second inlet mouth (3, 4), respectively for cold and for hot water, and with an outlet mouth (5) for mixed water, the mouths having respective axis (B, B') extended on planes substantially orthogonal to the main axis (A) of the body; first valve means (8, 6, 7) arranged inside the body at the first and second mouth (3, 4) and adapted to regulate the water flow therethrough; second valve means (17) arranged inside the body at the outlet mouth (5) and adapted to regulate the flow of mixed water therethrough said outlet mouth; and a first and a second electric motor (12, 15) mounted on the body to respectively control the first and second valve means.

## Description

The present invention is related to a tap/mixer unit for water systems.

In particular, the tap/mixer unit according to the present invention comprises:
- a single tubular body provided with a first and second inlet mouth, respectively for cold and for hot water, and with an outlet mouth for mixed water, said mouths having respective axis extended on planes substantially orthogonal to the main axis of the body;
- first valve means arranged inside the body at said first and second mouth, adapted to regulate the water flow through said first and second mouth;
- second valve means arranged inside the single body at the outlet mouth, adapted to regulate the flow of mixed water through said outlet mouth;
- a first and a second electric motor adapted to respectively control the first and the second valve means, and mounted on said body.

The unit according to the present invention serves both as a tap and a mixer, both controllable electronically. The respective means that perform such functions are arranged on a single body in a configuration that allows obtaining a simple and efficient production process of the unit, reducing overall dimensions to the minimum, and facilitating installation, management and maintenance of the unit.

Further characteristics and advantages of the invention shall be apparent from the attached drawings, strictly provided for exemplifying and non-limiting purposes, wherein:
- figure 1 represents a perspective view of the unit according to the present invention;
- figure 2 represents a sectional view of the unit of figure 1.

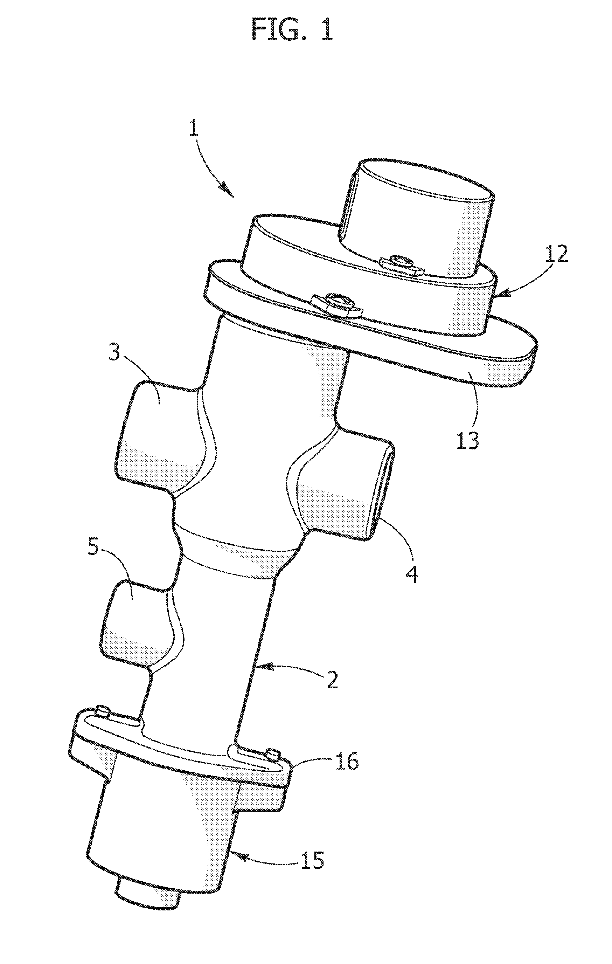

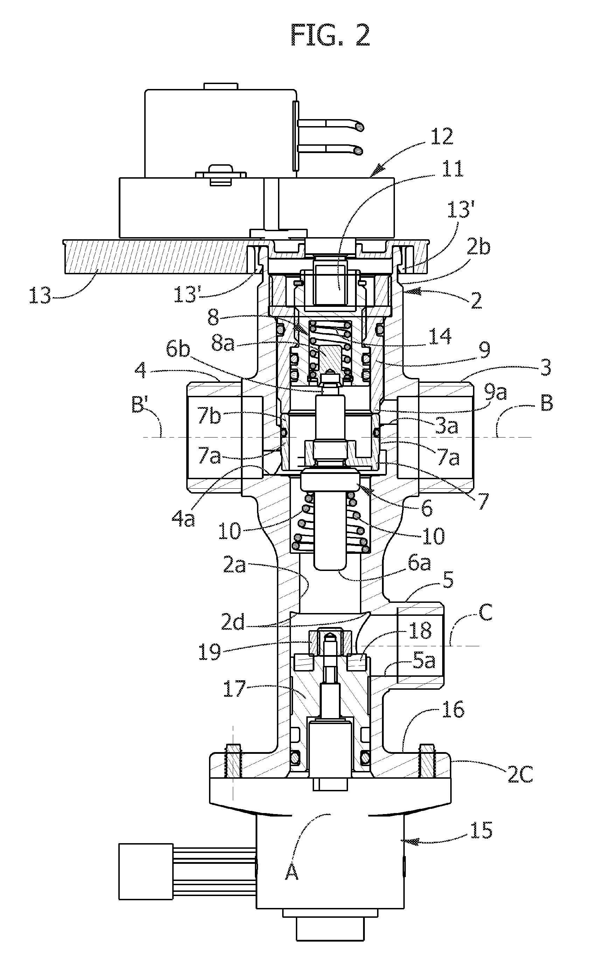

Referring to figure 1, a tap/mixer unit according to the present invention is indicated with 1. The tap/mixer unit comprises a tubular single body 2 having a through passage 2a and defining a main axis A (observable in figure 2).

The body 2 comprises a first and a second inlet mouth 3, 4, respectively for cold and for hot water. The mouths 3 and 4 have a substantially circular section and define respective axis B and B' and which extend on a same plane orthogonal to the main axis A of the tubular body 2.

The tubular body 2 further comprises an outlet mouth 5 having a substantially circular mouth and defining an axis C orthogonal to axis A of the tubular body 2. The outlet mouth 5 has an opening 5a leading into passage 2a and it is further spaced with respect to mouths 3 and 4 along axis A.

The mouths 3 and 4 internally have respective openings 3a, 4a that lead into the passage 2a of the tubular body 2.

A thermostatic element 6 is arranged sliding inside the passage 2a of the tubular body 2, at the openings 3a and 4a. The element 6 is coaxially accommodated inside the passage 2a and includes, in a generally per se known manner, a casing 6a, bearing a slide valve 7, which contains dilatable material (typically wax) having a high thermal dilatation coefficient. Protruding from the internal end of the casing 6a is a stem 6b on which the casing 6a slides axially. The free end of the stem 6b is axially engaged with a slider 8a usually maintained in the forward position represented in figure 2 by the action of a spring 14. The thermostatic element 6, at contact with hot and cold water, dilates or contracts, thus moving the slide valve 7 and hence proportionally regulating the inflow of water flows, as described hereinafter.

The slider 8a is borne by a screw element 8, which is screwed into an internally threaded bushing 9 and fixed onto the end 2b of the tubular body 2.

The bushing 9 has an end edge 9a adapted to cooperate with a corresponding end edge 7b of the slide valve 7 to close the opening 3a of the inlet mouth 3.

The screw element 8 defines the operating position, along axis A, of the thermostatic element 6, against the action of a frusto-conical spring 10 operating on the casing 6a of the thermostatic element 6, and substantially more yielding with respect to the spring 14. The frusto-conical spring 10 lies on a special seat obtained in the passage 2a.

The screw element 8 is engaged, at its end opposite to that at contact with the thermostatic element 6, by the shaft 11 of a step by step electric motor 12. The motor 12 is fixed to a plate 13 mounted on the end 2b of the body 2 through the coupling of flexible fins 13' that end up engaged with respective teeth on an external edge of the end 2b of the body 2.

The motor 12 controls - through the shaft 11 - the rotation of the screw element 8 and thus the screwing degree of the latter into the bushing 9.

A gasket element is provided for in the slide valve 7 so as to avoid communication between the opening 3a and the opening 4a along the external side of the valve itself.

Further gasket elements are provided for on the bushing 9 and on the screw element 8 so as to protect the electric motor 12 against leakage of water.

The structure, described up to now, serves as a mixer according to the method illustrated hereinafter. The user may set the temperature of the mixed water through a control interface (not illustrated in the figures). Thus the control interface transmits a control signal to the motor 12 to rotate the screw element 8 in such a manner to move it to a given axial position that also defines the operating position of the thermostatic element 6. The operating position of the thermostatic element 6 represents the axial position of the latter suitable to guarantee - during operation of the unit - a correct adjustment operation of the hot and cold water flows by the thermostatic element itself. In such sense, the electric motor 12 thus automatically calibrates the unit in the mixture function thereof.

During operation, as previously mentioned, the thermostatic element 6, at contact with the hot and cold water, dilates or contracts, axially moving the slide valve 7 in such a manner to vary the spaces of the openings 3a and 4a of the mouths 3 and 4, and thus proportionally regulate the inlet of the water flows depending on the detected temperature.

As mentioned previously, the slider 8a, on which the stem 6b of the thermostatic element 6 is engaged, is moveable inwards the screw element 8 once the thrust exerted by the thermostatic element 6, thereagainst, exceeds the contrast force exerted by the spring 14. Such movement provides a safety over travel of the thermostatic element 6 which allows to promptly close the slide valve each time lack of cold water is detected.

At the end 2c of the body 2, opposite end 2b, there is an end flange 16 on which a linear electric motor 15 is fixed by means of screws. The linear motor 15 controls the motion, along the direction of axis A, of a plug element 17 arranged sliding inside the passage 2a of the body 2. The plug element 17 has - on the upper part - a gasket ring 18 which, in a position of maximum projection of the plug element in the passage 2a of the body 2, ends up in abutment against an edge 2d obtained in the passage 2a. As observable in figure 2, the edge 2d is interposed between the openings 3a, 4a and opening 5a of the outlet mouth 5, and adjacent to the latter, in such a manner that such position of maximum projection of the plug element 17 the outlet mouth 5 is closed. A plug element 19 fixes the gasket 18 onto the plug element 17 and simultaneously isolates the linear motor 15 from the water path. For the same purpose, a further basket is provided for on the plug element 17 between the external surface of the plug element and the corresponding wall of the passage 2a of the body 2.

The structure described above serves as a tap according to the method described hereinafter. The user sets the flow rate of the mixed water through the abovementioned control interface. Thus, the control interface sends a control signal to the motor 15 to move the plug element 17 in an axial position capable of determining an opening space 5a of the mouth 5 in such a manner that - during the operation of the unit - the set flow rate of the mixed water is obtained.

## Claims

1. Tap/mixer unit for water systems **characterised in that** it comprises:
- a single tubular body (2) provided with a first and second inlet mouth (3, 4), respectively for cold and for hot water, and with an outlet mouth (5) for mixed water, said mouths having respective axis (B, B') extended on planes substantially orthogonal to the main axis (A) of said body;
- first valve means (8, 6, 7) arranged inside said body at said first and second mouth (3, 4) and adapted to regulate the water flow through said first and second mouth;
- second valve means (17) arranged inside said body at said outlet mouth (5) and adapted to regulate the flow of mixed water through said outlet mouth;
- a first and a second electric motor (12, 15) adapted to respectively control said first and second valve means, and mounted on said body.

2. Tap/mixer unit according to claim 1, **characterised in that** said first and second electric motor (12, 15) are respectively mounted at a first and second end (2b, 2c), opposite from each other, of said body.

3. Tap/mixer unit according to claim 2, **characterised in that** said body has a passage (2a) along said main axis (A) onto which respective openings (3a, 4a) of said first and second mouth lead, and **in that** said first valve means comprise a thermostatic element (6) arranged sliding inside said passage, said first electric motor (12) being adapted to regulate the operating position along said main axis of said thermostatic element.

4. Tap/mixer unit according to claim 3, **characterised in that** said outlet mouth (5) has an opening (5a) leading to said passage (2a) and **in that** said second valve means comprise a plug element (17) arranged inside said passage, said second electric motor (15) being adapted to regulate the position along said main axis (A) of said plug element (17).

5. Tap/mixer unit according to claim 3, **characterised in that** said first electric motor (12) is a step by step motor that rotates a screw element (8) which cooperates with the internal threading of a bushing (9), fixed inside said passage, in such a manner to translate along the latter, said screw element (8) engaging an end of said thermostatic element (6) with a slider (8a).

6. Tap/mixer unit according to claim 4, **characterised in that** said second electric motor (15) is a linear motor.

7. Tap/mixer unit according to claim 5, **characterised in that** said thermostatic element (6) comprises a casing (6a), bearing a slide valve 7, which contains dilatable material, and projecting from the internal end thereof being a stem (6b) on which the casing (6a) slides axially, during the operation of said unit, said casing (6a) being adapted to move said slide valve (7).

8. Tap/mixer unit according to claim 6, **characterised in that** said plug element (17) has an annular gasket (18) coaxial to said passage (2a) and adapted to abut against a corresponding annular seat (2d) of said body, adjacent to said opening (5a) of said outlet mouth, in such a manner to close said outlet mouth.

9. Tap/mixer unit according to claim 7, **characterised in that** said first and second mouth have respective axes (B, B') extended on the same plane orthogonal to said main axis of said single body.

10. Tap/mixer unit according to claim 9, **characterised in that** said outlet mouth (5) has an axis (C) extended on a plane orthogonal to said main axis and spaced, along the latter, with respect to said first and second mouth.

11. Tap/mixer unit according to claim 2, **characterised in that** said first motor (12) is fixed to a plate (13), mounted on said first end (2b) of the body (2) through the coupling of flexible fins (13') that end up engaged with respective teeth on an external edge of said first end (2b) of the body (2).

12. Tap/mixer unit according to claim 2, **characterised in that** said second end (2c) of said single body has an end flange (16) on which said second electric motor (15) is fixed.

13. Tap/mixer unit according to claim 7, **characterised in that** said slider (8a), on which the stem (6b) of said thermostatic element (6) is engaged, is moveable in a receded position in the screw element (8) once the thrust exerted by the stem (6b), thereagainst, exceeds the contrast force exerted by the elastic element (14) of said screw element (8), thus providing a safety over travel of the thermostatic element (6).
